# EUROPEAN PATENT SPECIFICATION

(11) **EP 2 399 092 B1**
(45) Date of publication and mention of the grant of the patent: **08.06.2016**
(21) Application number: 10709245.4
(22) Date of filing: 17.02.2010
(51) Int. Cl.: A24B 3/04, F26B 17/10, F26B 23/00, F26B 21/08

(54) **DRYING APPARATUS WITH ENERGY RECUPERATION**
TROCKNER MIT ENERGIE-RÜCKGEWINNUNG
APPAREIL DE SÉCHAGE AVEC RECUPERATION DE CHALEUR

(30) Priority: 17.02.2009 GB 0902629
(43) Date of publication of application: 28.12.2011
(73) Proprietor: Dickinson Legg Limited, Winchester, Hampshire SO23 7SS (GB)
(72) Inventor: WHITE, Thomas, Henry, Hampshire SO23 7AY (GB); JAMES, Alan, David, Hampshire SO20 6AH (GB); FAVARO, Mansueto, I-31038 Paese (IT)
(74) Representative: Pugsley, Victoria Antonietta
(86) International application number: PCT/GB2010/000279
(87) International publication number: WO 2010/094913

(56) References cited:
- EP-A1- 1 843 114
- EP-A2- 1 707 910
- WO-A2-2010/051572
- CA-A1- 2 346 138
- DE-A1- 3 323 000

## Description

The present invention relates to drying apparatus for drying a fibrous material, particularly, but not exclusively to a drying apparatus for drying a fibrous material such as tobacco leaves or portions of tobacco leaves.

Tobacco leaves are processed for cigarette manufacture in a primary tobacco process. Laminate portions of tobacco leaves are compressed and then cut in a cutting machine to provide tobacco particles suitable for cigarette manufacture. Moisture is removed from the fibrous tobacco material typically to improve the handling and filling properties of the tobacco material.

It is known, within the tobacco industry, to employ pneumatic conveying dryers, otherwise known as flash dryers, for reducing the moisture content of cigarette filler material to a level such as is suitable for cigarette manufacture and packing. The general principle in such dryers is that the tobacco product is conveyed along a passageway by a flow of hot gas. The gas flow provides an environment in which the tobacco product is dispersed and dried within the passageway. The tobacco product is then separated by some means from the gas stream. Product drying takes place due to heat and mass transfer between the gas stream and the tobacco product. It is known to use superheated steam, air, a mixture of air and carbon dioxide or air with other combustion components as the conveying gas.

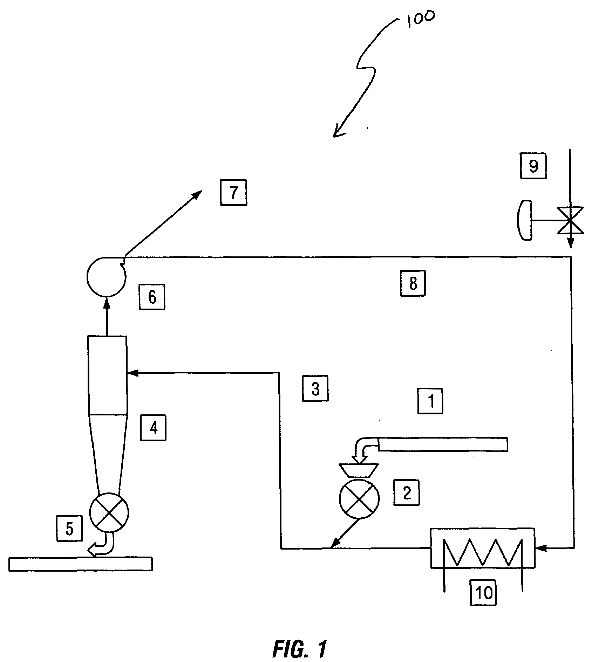

Figure 1 illustrates such a conventional drying apparatus 100, comprising a process heater 10, a product feeder device 1, apparatus for providing controlled discharge and release of material, in this example the release apparatus comprises a rotary air lock 2, further comprising a duct 3, a separator and another rotary air lock and discharge apparatus 5. Typically the separator is a cyclonic separator 4. Moist tobacco product is stored in the feeder device 1 and then released from rotary air lock 2, the product is dispersed into the duct 3 and a mixture of gas and solids is conveyed along the duct 3 to the cyclonic separator 4 by a conveying flow of hot gas. The cyclonic separator 4 separates dried solids of tobacco product from the gas stream. The dried tobacco product is discharged through air lock 5 and may then be conveyed onto the next stage of the cigarette manufacturing process as required.

The conventional drying apparatus illustrated in figure 1 further comprises components to capture and recirculate the conveying gas stream. The drying apparatus further comprises a fan 6, outlet 7, collection duct 8 and steam injection apparatus. Gas flow exiting the cyclonic separator 4 is conveyed to the fan 6 for recirculation towards the process heater 10. Steam is injected into the system via a suitable control valve 9 and flow metering system. The fan 6 acts to generate sufficient pressure to convey the gas stream along duct 8. Surplus gas is exhausted at outlet 7. Surplus gas results from the inevitable inward leakage of air at duct connection points and steam injection are air lock points in the system and from the evaporation of moisture from the originally moist tobacco product. In the example illustrated in Figure 1, the surplus gas is shown exhausted to atmosphere the gas may however, be treated or purified before release instead. Examples include condensing or scrubbing, for example chemical scrubbing, to remove any of impurities, odours and pollutants from the vapour emission.

DE3323000 describes an arrangement for drying tobacco comprising a heat exchanger.

The drying apparatus and technique described above can be inefficient and costly. The steps of steam generation and heating require significant energy input. In addition the influx of air at various points within the system can result in impure exhaust products. It has been suggested that heat energy from the exhaust and surplus gas given off from the drying process may be recovered using a heat exchanger. However the temperature of the recovered energy is relatively low and not of great benefit to the system.

It is desirable to provide an alternative apparatus and method for drying a fibrous product such as tobacco which avoids the aforementioned problems.

According to a first aspect, the invention provides a drying apparatus for drying a fibrous material comprising, a heater arranged to heat a first gas stream and a fibrous material, the first gas stream arranged to enter the drying apparatus at an inlet, the gas stream including a first steam component a separator for separating a said fibrous material from the first gas stream to form a second gas stream, a heat exchanger arranged to condense and separate a steam component and a water component from the second gas stream, and further arranged to generate a second steam component at low pressure, and a compressor arranged to compress the second steam component and return the steam component to the inlet.

According to a second aspect, the invention provides a drying apparatus for drying a fibrous material comprising, a heater arranged to heat a first gas stream, the first gas stream including steam and a said fibrous material, a separator for separating a said fibrous material from the first gas stream to form a second gas stream, a compressor arranged to compress the second gas stream, a heat exchanger arranged to condense and separate a steam component and a water component from the second gas stream, and further arranged to generate a second steam component at low pressure, and return the second steam component to the inlet.

The present invention seeks to recover the energy content of the exhaust from the drying apparatus or dryer and return this to the drying apparatus for re-use. In accordance with the present invention as seen from a third aspect, there is provided a method of drying a fibrous product using the apparatus of the present invention.

Further preferred features of the invention are defined in the accompanying claims.

Product quality considerations have tended to dictate the use of superheated steam as the drying medium in tobacco dryers. In these dryers, a high concentration of steam in the drying gas is achieved by minimising the influx of air, and by injecting steam into the process to supplement that which is generated by evaporating the tobacco product's own moisture.

It is desirable to maintain a low oxygen level within such a dryer, as this prevents any risk of fire and improves product quality by inhibiting surface oxidation of the product.

The exhaust from the drying process comprises the water evaporated from the product, plus inward air leakage and steam injection. The exhaust is at a pressure which is close to that of atmospheric, and has a large energy content due to the enthalpy of the water evaporated from the product.

The exhaust condition for the drying apparatus is that it comprises 90% steam and 10% air by volume, at a temperature of about 150 °C and a pressure of 1 bar absolute. Using a heat exchanger, heat energy can be recovered from such a gas stream but the temperature of the recovered energy is relatively low: it will be significantly below the condensation temperature of the process gas, which will be below 100°C at atmospheric pressure.

It is desirable to raise the temperature of the recovered energy to a useful level, thus it is necessary to introduce a compression stage into the process. A heat exchanger can be employed as described below in a preferred embodiment to generate steam from water at low pressure, and then the resulting sub-atmospheric pressure steam can be compressed to a pressure which is suitable for injection into the process. This embodiment is preferred due to the fact that the compressor is only required to handle clean steam which is uncontaminated with gums and dust from the process exhaust, although a larger compressor is required to accommodate the lower gas density at its inlet. The use of a heat exchanger ensures that the steam which is generated from the recovered heat is uncontaminated with air, or other substances which might affect the quality of the product being processed.

Embodiments of the present invention will now be described by way of example only and with reference to the accompanying drawings, in which:
Figure 1 is a schematic view of a prior art drying apparatus;
Figure 2 is a schematic view of the drying apparatus according to a first embodiment of the present invention; and
Figure 3 is a schematic sectional view of the drying apparatus according to a second embodiment of the present invention.

A type of conventional known drying apparatus and the drying apparatus of the present invention will now be described with reference to the apparatus of figures 1, 2 and 3. Some details of the structure and method of operation of known drying apparatus have been set out above and summary details are as follows. Moisture is removed from moist tobacco products in a duct 3 conveying and dispersing the tobacco product in an superheated gas stream. A cyclonic separator acts to separate the tobacco product from exhaust gas which can then be processed and purified or recirculated.

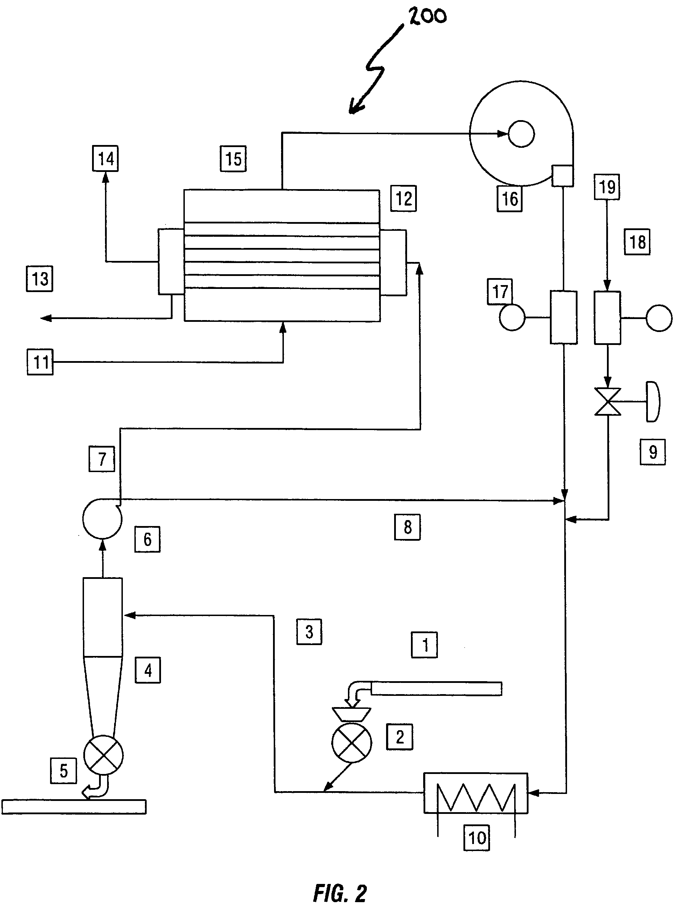

The drying apparatus 200, 300 of the first and second embodiments of the present invention include some components substantially similar to that of the apparatus illustrated in figure 1 and so similar features have been referenced using the same reference numerals. Referring to figure 2 of the drawings there is shown a drying apparatus 200 according to a first embodiment of the present invention. As shown in figure 2 however, the drying apparatus of the present invention differs from conventional apparatus in that the apparatus 200 further comprises a heat exchanger 12 for condensing the exhaust gas stream, and having an access inlet 11 and outlets 13, 14, a compressor 16 and a steam monitoring device 17. In a preferred embodiment the steam monitoring device is a steam flowmeter and the compressor is a rotary lobe compressor. The apparatus 200 further comprises a separate, independent steam supply 19 and steam injection system for providing additional steam into the process steam injection line 15. The steam injection system comprises a flowmeter 18 and a flow control valve 9 responsive to the steam monitoring device 17.

Steam is injected into the system via the suitable control valve and flow metering system in order to maintain the required low oxygen concentration in the dryer, examples of which will be known to those of skill in the art.

The apparatus 200 operates in the manner described above for conventional apparatus 100. In contrast to drying apparatus 100, the exhaust gas at 7 from drying apparatus 200 is directed to the heat exchanger 12 where it provides heat to evaporate water 11 which is supplied to an inlet 11 at the shell side of the heat exchanger 12. Level sensor controls (not shown) maintain the water level within the heat exchanger 12 so that the heat transfer surfaces are covered but there is no possibility of water passing out from the heat exchanger 12 into the process steam injection line 15. The pressure within the heat exchanger 12 is maintained below atmospheric pressure, at 0.5 bar absolute in the preferred embodiment. The negative pressure is created by the compressor 16. At this low pressure, steam is generated by the heat exchanger at a temperature of between 65 to 75 °C, around 70 °C, thus recovering the latent heat content of the steam in the exhaust gas. In other words the heat energy in the drying process exhaust gas mixture is used to generate steam at low pressure by means of the heat exchanger 12.

This low pressure steam, without water or other content, is then is compressed mechanically by the compressor 16 and injected into the process gas flow to maintain the desired steam concentration. The low pressure stream is compressed by the compressor 16 to a pressure greater than 1 bar absolute. Pressure above 1 bar has been found to be suitable for injection of the steam back into the process line and the drying process and process heater stage 10. The flow of steam injected into the duct 3 and separator 4 is controlled by varying the speed of the compressor 16 according to feedback from a steam flowmeter 17. If the steam flow from the compressor 16 is less than the desired steam flow, then an independent steam injection system consisting of a flowmeter 18 and flow control valve 9 can be used to supply the appropriate flow of additional steam from a separate source 19. In this preferred embodiment the separate source 19 is a central boiler plant and provides steam to bring the total steam injection flow to a predetermined desired level. Not all the exhaust flow is condensed by the heat exchanger. In particular the air content of the exhaust gas is discharged via outlet 14 from the condenser of the heat exchanger 12. The exhaust and excess gas at outlet 7 and 14 includes steam components due to the output from the heat exchanger 12 being in a saturated state. As mentioned above the exhaust gas may require to additional treatment in order to purify the gas and/or remove odourous constituents. Water will also be discharged at outlet 13 from the heat exchanger 12 where it has condensed while giving up its latent heat of condensation. By gas stream we mean the fluid flow in the drying apparatus that conveys the tobacco product, gas, steam, impurities and in some cases water through the system.

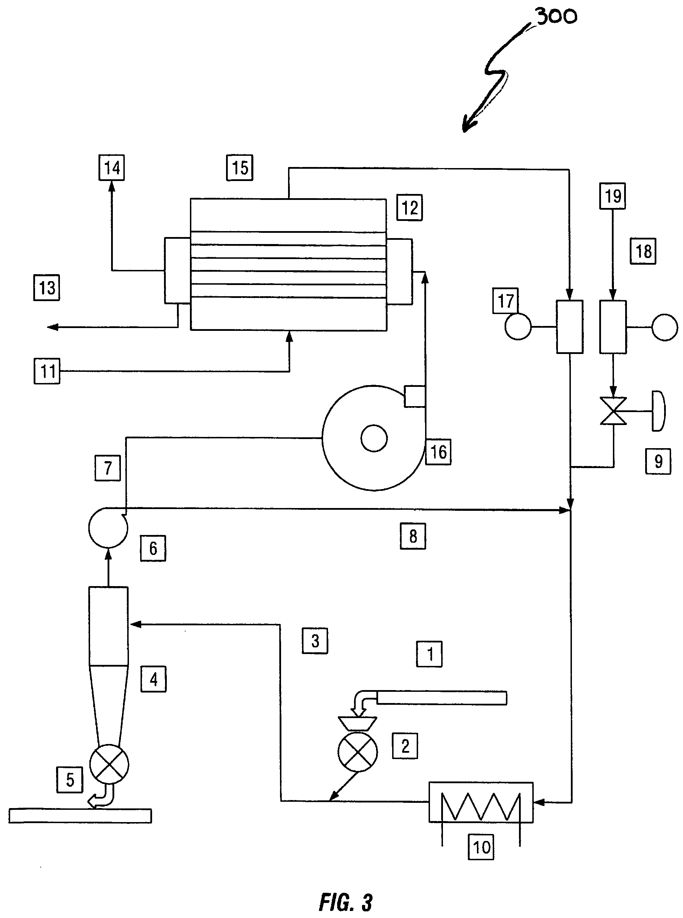

Referring to figure 3 of the drawings there is shown a drying apparatus 300 according to a second embodiment of the present invention. The drying apparatus 200, 300 of the first and second embodiment of the present invention are substantially similar and so similar features have been referenced using the same reference numerals. The arrangement of the drying apparatus 300 differs from that of drying apparatus 200 in that compressor 16 is located upstream of heat exchanger 12. The compressor 16 and thus the compression stage of the drying take places before the heat exchanger 12. In this embodiment the exhaust gas is recompressed directly before being re-injected as steam into the drying process, with means such as the heat exchanger 12 of this preferred embodiment to remove air from the steam. Thus the temperature of the recovered gas and energy is raised to a useful level for use in the drying process.

Various modifications may be made to the described embodiments, within the scope of the appended claims. There may be a different number of drying stages or compressors or heat exchanger means. There may be more than one separator. In addition other types of independent steam source may be used, such as a canister or supply entirely external to the operating plant. The efficiency of the energy recovery can be optimised as desired and depends on many detailed design considerations.

## Claims

1. A drying apparatus (200) for drying a fibrous material comprising,
a heater (10) arranged to heat a first gas stream and a fibrous material, the first gas stream arranged to enter the drying apparatus at an inlet, the gas stream including a first steam component,
a separator (4) for separating a said fibrous material from the first gas stream to form a second gas stream,
a heat exchanger (12) arranged to condense and separate a first steam component and a water component from the second gas stream, and further arranged to generate a second steam component at low pressure,
a compressor (16) arranged to compress the second steam component and return the steam component to the inlet.

2. A drying apparatus (300) for drying a fibrous material comprising,
a heater (10) arranged to heat a first gas stream, the first gas stream including steam and a said fibrous material,
a separator (4) for separating a said fibrous material from the first gas stream to form a second gas stream,
a compressor (16) arranged to compress the second gas stream,
a heat exchanger (12) arranged to condense and separate a steam component and a water component from the second gas stream, and further arranged to generate a second steam component at low pressure, and return the second steam component to the inlet.

3. A drying apparatus according to claim 1 or claim 2 wherein the gas stream includes superheated steam.

4. A drying apparatus according to claim 1, claim 2 or claim 3, further comprising apparatus (9,18,19) arranged to introduce additional steam to the first gas stream.

5. A drying apparatus according to any preceding claim, wherein the additional steam is from an alternative source, external to the drying apparatus.

6. A drying apparatus according to any preceding claim, wherein the heat exchanger (12) is arranged to have a pressure of the gas stream of less than 1 bar, preferably in the range from 0.3 bar to 0.7 bar pressure.

7. A drying apparatus according to any preceding claim, wherein the compressor (16) is arranged to compresses the gas stream to a pressure greater than 1 bar, preferably in the range from 1.1 bar to 1.5 bar pressure.

## Patentansprüche

1. Trocknungsvorrichtung (200) zum Trocknen eines Fasermaterials, die Folgendes umfasst:
eine Heizung (10) zum Erhitzen eines ersten Gasstroms und eines Fasermaterials, wobei der erste Gasstrom zum Eintreten in die Trocknungsvorrichtung an einem Einlass ausgelegt ist, wobei der Gasstrom eine erste Dampfkomponente beinhaltet,
einen Separator (4) zum Abscheiden eines genannten Fasermaterials aus dem ersten Gasstrom, um einen zweiten Gasstrom zu bilden,
einen Wärmetauscher (12) zum Kondensieren und Abscheiden einer ersten Gaskomponente und einer Wasserkomponente aus dem zweiten Gasstrom, und ferner zum Erzeugen einer zweiten Dampfkomponente mit niedrigem Druck,
einen Kompressor (16) zum Komprimieren der zweiten Dampfkomponente und zum Zurückführen der Dampfkomponente zum Einlass.

2. Trocknungsvorrichtung (300) zum Trocknen eines Fasermaterials, die Folgendes umfasst:
eine Heizung (10) zum Erhitzen eines ersten Gasstroms, wobei der erste Gasstrom Dampf und das genannte Fasermaterial beinhaltet,
einen Separator (4) zum Abscheiden des genannten Fasermaterials aus dem ersten Gasstrom zum Bilden eines zweiten Gasstroms,
einen Kompressor (16) zum Komprimieren des zweiten Gasstroms,
einen Wärmetauscher (12) zum Kondensieren und Abscheiden einer Dampfkomponente und einer Wasserkomponente aus dem zweiten Gasstrom und ferner zum Erzeugen einer zweiten Dampfkomponente mit niedrigem Druck und zum Zurückführen der zweiten Dampfkomponente zum Einlass.

3. Trocknungsvorrichtung nach Anspruch 1 oder Anspruch 2, wobei der Gasstrom Heißdampf beinhaltet.

4. Trocknungsvorrichtung nach Anspruch 1, Anspruch 2 oder Anspruch 3, die ferner eine Vorrichtung (9, 18, 19) zum Einleiten von zusätzlichem Dampf in den ersten Gasstrom beinhaltet.

5. Trocknungsvorrichtung nach einem vorherigen Anspruch, wobei der zusätzliche Dampf von einer alternativen Quelle außerhalb der Trocknungsvorrichtung kommt.

6. Trocknungsvorrichtung nach einem vorherigen Anspruch, wobei der Wärmetauscher (12) so ausgelegt ist, dass er einen Druck des Gasstroms von weniger als 1 bar, vorzugsweise im Bereich von 0,3 bar bis 0,7 bar Druck hat.

7. Trocknungsvorrichtung nach einem vorherigen Anspruch, wobei der Kompressor (16) zum Komprimieren des Gasstroms auf einen Druck von mehr als 1 bar, vorzugsweise im Bereich von 1,1 bar bis 1,5 bar Druck umfasst.

## Revendications

1. Appareil de séchage (200) pour sécher une matière fibreuse comprenant :
un dispositif de chauffage (10) agencé de façon à chauffer un premier flux de gaz et une matière fibreuse, le premier flux de gaz étant agencé de façon à entrer dans l'appareil de séchage au niveau d'un orifice d'admission, le flux de gaz incluant un premier composant de vapeur,
un séparateur (4) pour séparer ladite une matière fibreuse du premier flux de gaz afin de former un deuxième flux de gaz,
un échangeur de chaleur (12) agencé de façon à condenser et à séparer un premier composant de vapeur et un composant d'eau à partir du deuxième flux de gaz, et en outre agencé de façon à générer un deuxième composant de vapeur à basse pression,
un compresseur (16) agencé de façon à comprimer le deuxième composant de vapeur et à renvoyer le composant de vapeur à l'orifice d'admission.

2. Appareil de séchage (300) pour sécher une matière fibreuse comprenant :
un dispositif de chauffage (10) agencé de façon à chauffer un premier flux de gaz, le premier flux de gaz incluant de la vapeur et ladite une matière fibreuse,
un séparateur (4) pour séparer ladite une matière fibreuse du premier flux de gaz afin de former un deuxième flux de gaz,
un compresseur (16) agencé de façon à comprimer le deuxième flux de gaz,
un échangeur de chaleur (12) agencé de façon à condenser et à séparer un composant de vapeur et un composant d'eau à partir du deuxième flux de gaz, et en outre agencé de façon à générer un deuxième composant de vapeur à basse pression, et à renvoyer le deuxième composant de vapeur à l'orifice d'admission.

3. Appareil de séchage selon la revendication 1 ou la revendication 2, le flux de gaz incluant de la vapeur surchauffée.

4. Appareil de séchage selon la revendication 1, la revendication 2 ou la revendication 3, comprenant en outre un appareil (9, 18, 19) agencé de façon à introduire de la vapeur additionnelle au premier flux de gaz.

5. Appareil de séchage selon l'une quelconque des revendications précédentes, la vapeur additionnelle provenant d'une source alternative qui est externe à l'appareil de séchage.

6. Appareil de séchage selon l'une quelconque des revendications précédentes, l'échangeur de chaleur (12) étant agencé de façon à présenter une pression pour le flux de gaz qui est inférieure à 1 bar, de préférence dans la gamme de 0,3 bar à 0,7 bar de pression.

7. Appareil de séchage selon l'une quelconque des revendications précédentes, le compresseur (16) étant agencé de façon à comprimer le flux de gaz jusqu'à une pression qui est supérieure à 1 bar, de préférence dans la gamme de 1,1 bar à 1,5 bar de pression.
